# EUROPEAN PATENT APPLICATION

(11) **EP 4 826 860 A1**
(43) Date of publication of application: **21.10.2026**
(21) Application number: 24934542.2
(22) Date of filing: 12.04.2024
(51) Int. Cl.: H01M 50/147, H01M 50/166

(54) **BATTERY CELL, BATTERY, AND ELECTRICAL APPARATUS**

(71) Applicant: Contemporary Amperex Technology Co., Limited, Ningde, Fujian 352100 (CN)
(72) Inventor: CAO, Mengkai, Ningde, Fujian 352100 (CN); CAI, Xianghu, Ningde, Fujian 352100 (CN); HUANG, Shoujun, Ningde, Fujian 352100 (CN); CHENG, Qi, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN)
(74) Representative: Lorenz Seidler Gossel Part. mbB
(86) International application number: PCT/CN2024/087576
(87) International publication number: WO 2025/213465

(57) **Abstract**

The embodiments of the present application provide a battery cell, a battery, and an electrical apparatus. The battery cell comprises a housing, a top cover, and an electrode assembly. The housing is provided with an accommodating space and an opening. The top cover seals and covers the opening. The electrode assembly is arranged within the accommodating space. The top cover comprises a cover body, a connecting side wall and a groove formed between the cover body and the connecting side wall, and an end portion of the housing extends into the groove and is connected with the top cover. When the electrode assembly expands cyclically and produces gas during charging and discharging, the housing deforms outwards when force is produced at the connection between the housing and the top cover, and the connecting side wall limits and supports the housing, so as to limit further outward deformation of the housing to a certain extent, thereby reducing the risk of fatigue cracking of the connecting structure between the housing and the top cover, improving the problem of failure of the connecting structure between the housing and the top cover, and increasing the service life.

## Description

### TECHNICAL FIELD

This application relates to the field of battery technologies, and in particular, to a battery cell, a battery, and an electric apparatus.

### BACKGROUND

This section is intended to provide background or context for embodiments of this application. The descriptions herein are not admitted to be prior art by virtue of their inclusion in this section.

In the production process of a battery, after a bare cell is placed into a housing and a top cover is closed, a housed cell can be obtained. After the bare cell is placed into the housing, housing-cover welding needs to be performed to weld the housing and the top cover together. In the related art, gas generated during cycling swelling and charging and discharging processes of the bare cell causes cracking at a junction between the housing and the top cover, and there is a problem of failure of a connection structure between the housing and the top cover.

### SUMMARY

In view of this, the embodiments of this application expect to provide a battery cell, a battery, and an electric apparatus, so as to alleviate the problem of failure of a connection structure between a housing and a top cover and prolong the service life of the battery cell.

To achieve the foregoing objective, a first aspect of the embodiments of this application provides a battery cell, including:
a housing having an accommodating space and an opening;
a top cover sealingly covering the opening; and
an electrode assembly disposed in the accommodating space;
where the top cover includes a cover body, a connecting side wall, and a groove formed between the cover body and the connecting side wall, and an end of the housing extends into the groove and is connected to the top cover.

In the battery cell provided in the embodiments of this application, the top cover sealingly covers the opening of the housing. The top cover is arranged to include a cover body and a connecting side wall, and a groove is formed between the cover body and the connecting side wall, so that during assembly, the end of the housing can extend into the groove and be connected to the top cover. In this way, when gas is generated during cycling swelling and charging and discharging of the electrode assembly to exert a force on a junction between the housing and the top cover, the housing deforms outward, while the connecting side wall provides limiting and supporting effects on the housing, thereby restricting further outward deformation of the housing to some extent, reducing the risk of fatigue cracking in a connection structure between the housing and the top cover, alleviating the problem of failure of the connection structure between the housing and the top cover, and prolonging the service life of the battery cell.

In some embodiments, the housing includes a body section and a connecting section connected to the body section, the connecting section extends into the groove and is connected to the top cover, and a distance between the connecting section and a central axis of the battery cell is smaller than a distance between the body section and the central axis of the battery cell.

Arranging the distance between the connecting section and the central axis of the battery cell to be smaller than the distance between the body section and the central axis of the battery cell allows the body section to expand outward as much as possible while implementing that the connecting section extends into the groove and is connected to the top cover, thereby increasing a size of the accommodating space and in turn increasing the energy density of the battery cell.

In some embodiments, the housing includes a transition section, the body section and the connecting section are connected through the transition section, a plane in which the body section is located is parallel to a plane in which the connecting section is located, and in a direction from the body section to the connecting section, a distance between the transition section and a central axis of the battery cell gradually decreases.

The housing is provided with a transition section, and in the direction from the body section to the connecting section, the distance between the transition section and the central axis of the battery cell gradually decreases, thereby increasing the size of the accommodating space as much as possible and further increasing the energy density of the battery cell.

In some embodiments, a height of the top cover at the groove is H1, satisfying 0.2 mm ≤ H1 ≤ 1.5 mm.

Setting the height of the top cover at the groove to 0.2 mm to 1.5 mm allows the height of the top cover at the groove to satisfy penetrating welding between the top cover and the end of the housing, and allows the top cover to have sufficient structural strength at the groove.

In some embodiments, a height of the top cover at the groove is H1, satisfying 0.3 mm ≤ H1 ≤ 1 mm.

Setting the height of the top cover at the groove to 0.3 mm to 1 mm facilitates penetrating welding between the top cover and the end of the housing, and further allows the top cover to have sufficient structural strength at the groove.

In some embodiments, on a cross section perpendicular to an extension direction of the groove, a width of the groove is L1, satisfying 0.4 mm ≤ L1 ≤ 3.5 mm.

Setting the width of the groove to 0.4 mm to 3.5 mm helps the end of the housing to extend into the groove and helps to increase a welding area between the end of the housing and a groove wall of the groove, thereby enhancing the strength of the connection structure between the housing and the top cover, reducing the risk of cracking of the connection structure between the housing and the top cover, and prolonging the service life of the battery cell.

In some embodiments, on a cross section perpendicular to an extension direction of the groove, a width of the groove is L1, satisfying 0.6 mm ≤ L1 ≤ 1 mm.

Setting the width of the groove to 0.6 mm to 1 mm facilitates manufacturing and forming of the housing and the top cover while allowing for sufficient strength of the connection structure between the housing and the top cover.

In some embodiments, a height of the connecting side wall is H2, and a height of the cover body is H, satisfying H - 0.5 mm ≤ H2 ≤ 13 mm.

The connecting side wall within this height range allows for sufficient contact area between the connecting side wall and the housing. When gas is generated during cycling swelling and charging and discharging of the electrode assembly to exert a force on the junction between the housing and the top cover, the connecting side wall provides sufficient limiting and supporting effects on the housing, thereby restricting further outward deformation of the housing to some extent, reducing the risk of fatigue cracking in the connection structure between the housing and the top cover, alleviating the problem of failure of the connection structure between the housing and the top cover, and prolonging the service life of the battery cell.

In some embodiments, a height of the connecting side wall is H2, and a height of the cover body is H, satisfying H ≤ H2 ≤ 11 mm.

In some embodiments, a thickness of the connecting side wall is L2, satisfying 0.2 mm ≤ L2 ≤ 1.5 mm.

In these embodiments, setting the thickness of the connecting side wall to 0.2 mm to 1.5 mm allows for sufficient strength of the connecting side wall, thereby enhancing the structural strength at the junction between the top cover and the housing while also reducing a volume of the top cover as much as possible, thereby increasing the energy density of the battery cell.

In some embodiments, a thickness of the connecting section is L3, satisfying 0.3 mm ≤ L3 ≤ 3 mm; or
on a cross section perpendicular to an extension direction of the groove, a width of the groove is L1, and a thickness of the connecting section is L3, satisfying 0 ≤ L1 - L3 ≤ 0.3 mm.

Setting the thickness of the connecting section to 0.3 mm to 3 mm allows for sufficient strength of the connecting section, thereby enhancing the structural strength at the junction between the top cover and the housing while also reducing volumes of the top cover and the housing as much as possible, thereby increasing the energy density of the battery cell.

The difference L1 - L3 is set to range from 0 mm to 0.3 mm. On one hand, this helps the housing to extend into the groove. On the other hand, this helps the connecting side wall to provide limiting and supporting effects on the housing when the housing deforms outward, that is, helping to reduce the situation or degree of deformation of the housing.

In some embodiments, a stepped surface facing the top cover is formed on an outer side wall of the housing, and an end of the connecting side wall abuts against the stepped surface.

On one hand, the stepped surface can provide a positioning effect on the top cover, and together with an end surface of the housing, provide a double positioning effect on the top cover, which helps to alleviate deformation of the top cover. On the other hand, this also helps to enhance the structural strength of the housing at a position where the stepped surface is formed.

In some embodiments, a size of the stepped surface in a thickness direction of the housing is L4, satisfying 0.1 mm ≤ L4 ≤ 0.5 mm.

Setting the size of the stepped surface in the thickness direction of the housing to 0.1 mm to 0.5 mm can reduce the volume of the housing and a material used for forming as much as possible while implementing positioning of the top cover, which helps to reduce costs and increase the energy density of the battery cell.

In some embodiments, the groove extends along an edge of the top cover.

This allows for more even force distribution near the groove.

In some embodiments, the battery cell is of a cuboid shape, and at least one longer side of the top cover is provided with the groove; or

When the battery cell is of a rectangular shape, the top cover and the housing are more prone to outward deformation and cracking at a larger surface, that is, the connection structure between the top cover and the housing fails at the longer side of the top cover. Therefore, providing the groove on the longer side of the top cover can effectively alleviate the problem of failure of the connection structure between the top cover and the housing.

The battery cell is of a cylindrical shape, and at least a partial region of the top cover is provided with the groove.

When the battery cell is of a cylindrical shape, the top cover may be provided with the groove in a circle extending along the edge of the top cover, or may be partially surrounded by the groove.

In some embodiments, the top cover and/or the housing is made of aluminum.

In some embodiments, a height of the cover body is H, satisfying 1 mm ≤ H ≤ 5 mm.

Setting the height of the cover body to 1 mm to 5 mm allows the top cover 12 to have sufficient strength to protect the electrode assembly in the accommodating space while also reducing the weight and volume of the battery cell, reducing the material used for the top cover, reducing costs, and improving the overall performance of the battery.

In some embodiments, a height of the cover body is H, satisfying 1.5 mm ≤ H ≤ 3 mm.

A second aspect of the embodiments of this application provides a battery, including at least one of the foregoing battery cells.

The battery provided in the embodiments of this application includes at least one battery cell according to the embodiments of this application. The top cover sealingly covers the opening of the housing. The top cover is arranged to include a cover body and a connecting side wall, and a groove is formed between the cover body and the connecting side wall, so that during assembly, the end of the housing can extend into the groove and be connected to the top cover. In this way, when gas is generated during cycling swelling and charging and discharging of the electrode assembly to exert a force on a junction between the housing and the top cover, the housing deforms outward, while the connecting side wall provides limiting and supporting effects on the housing, thereby restricting further outward deformation of the housing to some extent, reducing the risk of fatigue cracking in a connection structure between the housing and the top cover, alleviating the problem of failure of the connection structure between the housing and the top cover, and prolonging the service life of the battery cell.

A third aspect of the embodiments of this application provides an electric apparatus, including the foregoing battery, where the battery is configured to supply electrical energy to the electric apparatus.

The electric apparatus provided in the embodiments of this application includes a battery. The top cover sealingly covers the opening of the housing. The top cover is arranged to include a cover body and a connecting side wall, and a groove is formed between the cover body and the connecting side wall, so that during assembly, the end of the housing can extend into the groove and be connected to the top cover. In this way, when gas is generated during cycling swelling and charging and discharging of the electrode assembly to exert a force on a junction between the housing and the top cover, the housing deforms outward, while the connecting side wall provides limiting and supporting effects on the housing, thereby restricting further outward deformation of the housing to some extent, reducing the risk of fatigue cracking in a connection structure between the housing and the top cover, alleviating the problem of failure of the connection structure between the housing and the top cover, and prolonging the service life of the battery cell.

### BRIEF DESCRIPTION OF DRAWINGS

FIG. 1 is a schematic structural diagram of a vehicle according to an embodiment of this application;
FIG. 2 is a schematic three-dimensional exploded view of a battery according to an embodiment of this application;
FIG. 3 is a top view of a battery cell according to an embodiment of this application;
FIG. 4 is a cross-sectional view along direction A-A in FIG. 3;
FIG. 5 is an enlarged view of position B in FIG. 4;
FIG. 6 is a schematic diagram of deformation at a junction between a housing and a top cover when subjected to force according to an embodiment of this application; and
FIG. 7 is a schematic diagram of cracking at a junction between a housing and a top cover when subjected to force in the prior art.

### DESCRIPTION OF EMBODIMENTS

It should be noted that in absence of conflicts, the embodiments and features in the embodiments in this application may be combined with each other. The detailed description in the description of embodiments should be understood as an explanation of the purpose of this application and should not be regarded as an improper limitation on this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", "have", and any other variations thereof in this application are intended to cover non-exclusive inclusions.

In the description of the embodiments of this application, the terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

Reference to "embodiment" in the specification means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the associated objects.

In the description of the embodiments of this application, the orientations or positional relationships indicated by the technical terms "length", "width", "thickness", "height", "upper", "lower", "front", "rear", "left", "right", "vertical", "horizontal", "top", "bottom", "inside", "outside", "circumferential", "height direction", "first direction", "second direction", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as suitable to specific situations.

In the description of the embodiments of this application, unless otherwise specified and defined explicitly, the technical term "contact" should be understood in its general sense. It may refer to direct contact or contact through an intermediate medium layer. It may refer to contact between two parties in contact with each other with substantially no interaction force or contact between two parties in contact with each other with an interaction force.

With the development of clean energy, more and more devices use electrical energy as driving energy, and traction batteries that can store more electrical energy and can be repeatedly charged and discharged have been rapidly developed, for example, lithium-ion batteries. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, and aerospace.

With the vigorous promotion of new energy vehicles by the Chinese government, new energy vehicles have ushered in a great opportunity for development. The safety and stability of automobiles have always been the most concerned issues. Therefore, improving the safety of new energy vehicles is one of the important factors that determine whether new energy vehicles can be rapidly popularized. Improving the safety of batteries is an important way to improve the safety of new energy vehicles.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be of a cylindrical shape, a cuboid shape, or other shapes. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery generally includes a box configured to enclose one or more battery cells. The box can prevent fluid or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active electrode substance layer. The positive electrode active electrode substance layer is applied on a surface of the positive electrode current collector. The part of positive electrode current collector uncoated with the positive electrode active electrode substance layer protrudes out of the part of positive electrode current collector coated with the positive electrode active electrode substance layer and serves as a positive electrode tab. A lithium-ion battery is used as an example, for which, the positive electrode current collector may be made of aluminum and the positive electrode active electrode substance may be lithium cobaltate, lithium iron phosphate, ternary lithium, lithium manganate, or the like. The negative electrode plate includes a negative electrode current collector and a negative electrode active electrode substance layer. The negative electrode active electrode substance layer is applied on a surface of the negative electrode current collector. The part of negative electrode current collector uncoated with the negative electrode active electrode substance layer protrudes out of the part of negative electrode current collector coated with the negative electrode active electrode substance layer and serves as a negative electrode tab. The negative electrode current collector may be made of copper, and the negative electrode active electrode substance may be carbon, silicon, or the like. To allow a large current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like.

For example, the positive electrode current collector has two opposite surfaces in a thickness direction thereof, and a positive electrode material is disposed on either or both of the two opposite surfaces of the positive electrode current collector.

For example, the positive electrode current collector may be a metal foil or a composite current collector. For example, for the metal foil, aluminum with silver-plated surface treatment, stainless steel with silver-plated surface treatment, stainless steel, copper, aluminum, nickel, carbon electrode, carbon, nickel, titanium, or the like may be used. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

For example, the negative electrode may be a negative electrode plate, and the negative electrode plate may include a negative electrode current collector.

For example, the negative electrode current collector may be a metal foil or composite current collector. For example, for the metal foil, aluminum with silver-plated surface treatment, stainless steel with silver-plated surface treatment, stainless steel, copper, aluminum, nickel, carbon electrode, carbon, nickel, titanium, or the like may be used.

For example, the negative electrode current collector has two opposite surfaces in a thickness direction thereof, and a negative electrode material is disposed on either or both of the two opposite surfaces of the negative electrode current collector.

For example, the negative electrode material may be a well-known negative electrode active material used for batteries in the art. For example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, but may use other conventional materials that can be used as negative electrode active materials for batteries instead. One type of these negative electrode active materials may be used alone, or two or more types may be used in combination.

The battery cell further includes a packaging film and a housing. The packaging film covers the outside of the electrode assembly, and the housing packages the electrode assembly covered with the packaging film to form the battery cell. The packaging film may be a mylar film (mylar film), and the housing may be an aluminum shell. After the electrode assembly is wound and formed, the packaging of the mylar film and the housing is completed through a mylar wrapping process and housing insertion process. The mylar film seals and protects the electrode assembly, and the mylar film can effectively insulate the electrode assembly from the housing to avoid internal short circuits in the battery cell. The housing provides protection.

For example, the housing body includes a top cover and a housing, the housing body is provided with an opening, and the top cover closes the opening to form a closed space for accommodating the electrode assembly, electrolyte, and other substances. The housing body may be provided with one or more openings. The top cover may also be provided with one or more openings.

For example, the housing body is provided with at least one electrode terminal, and the electrode terminal is electrically connected to a tab of the electrode assembly. The electrode terminal may be directly connected to the tab or indirectly connected to the tab through an adapter. The electrode terminal may be disposed on the top cover or on the housing.

For example, the housing body is provided with an explosion-proof valve. The explosion-proof valve is configured to relieve an internal pressure of the battery cell.

For example, the battery cell may be a cylindrical battery cell, prismatic battery cell, pouch battery cell, or battery cell of another shape. Prismatic battery cells include square battery cells, blade battery cells, and multi-prismatic batteries, and multi-prismatic batteries are for example hexagonal batteries. This is not particularly limited in the embodiments of this application.

For example, the battery cell further includes a pressure relief structure. The pressure relief structure may be disposed on the top cover or on the housing to relieve an internal pressure or temperature of the battery cell.

For the development of battery technologies, many design factors need to be considered, for example, performance parameters such as energy density, discharge capacity, and charge and discharge rate, as well as reliability of the battery.

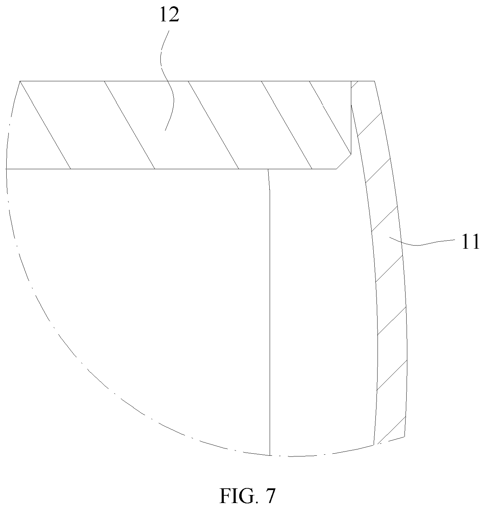

In the related art, referring to FIG. 7, when gas is generated during cycling swelling and the charging and discharging processes of the electrode assembly and exerts a force on the housing and the top cover, the housing deforms outward, stretching a connection structure between the housing and the top cover, which in turn causes fatigue cracking at a junction between the housing and the top cover, and there is a problem of failure of the connection structure between the housing and the top cover.

To alleviate the problem of failure of the connection structure between the housing and the top cover and prolong the service life of the battery cell, the embodiments of this application provide a battery cell, including a housing, a top cover, and an electrode assembly. The housing has an accommodating space and an opening. The top cover sealingly covers the opening. The electrode assembly is disposed in the accommodating space. The top cover includes a cover body, a connecting side wall, and a groove formed between the cover body and the connecting side wall, and an end of the housing extends into the groove and is connected to the top cover.

In the battery cell provided in the embodiments of this application, the top cover sealingly covers the opening of the housing. The top cover is arranged to include a cover body and a connecting side wall, and a groove is formed between the cover body and the connecting side wall, so that during assembly, the end of the housing can extend into the groove and be connected to the top cover. In this way, when gas is generated during cycling swelling and charging and discharging of the electrode assembly to exert a force on a junction between the housing and the top cover, the housing deforms outward, while the connecting side wall provides limiting and supporting effects on the housing, thereby restricting further outward deformation of the housing to some extent, reducing the risk of fatigue cracking in a connection structure between the housing and the top cover, alleviating the problem of failure of the connection structure between the housing and the top cover, and prolonging the service life of the battery cell.

The technical solutions described in the embodiments of this application are applicable to batteries and electric apparatuses using a battery.

The battery mentioned in the embodiments of this application is a battery that includes at least one battery cell provided in the embodiments of this application. One or more battery cells serve as a single physical module for providing a higher voltage and capacity. For example, the battery mentioned in this application may include a battery module, a battery pack, or the like. A battery generally includes a box configured to enclose one or more battery cells. The box can prevent fluid or other foreign matter from affecting charging or discharging of the battery cell.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

It should be noted that the technical solutions described in the embodiments of this application are not only applicable to the batteries and electric apparatuses described above, but also applicable to all batteries including a box and electric apparatuses using batteries. However, for the brevity of description, in the following embodiments, an electric vehicle is used as an example for description.

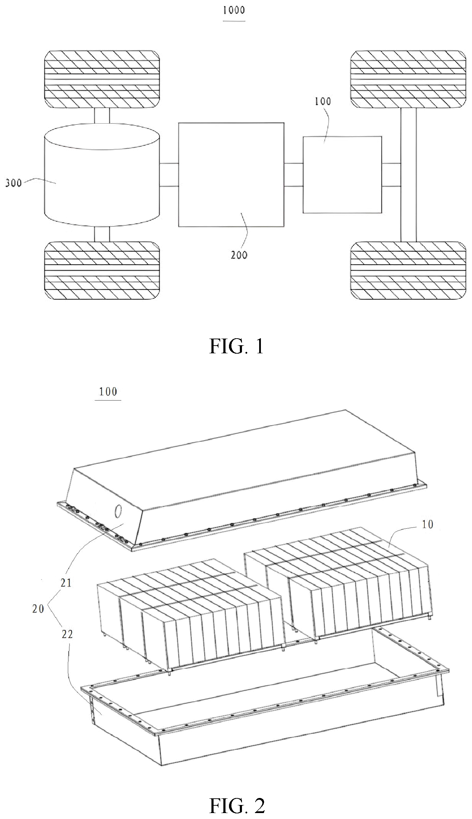

Referring to FIG. 1, FIG. 1 is a schematic structural diagram of a vehicle 1000 according to some embodiments of this application. A controller 200, a motor 300, and a battery 100 may be provided inside the vehicle 1000. The controller 200 is configured to control the battery 100 to supply power to the motor 300. For example, the battery 100 may be disposed at the bottom, front, or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000. In another embodiment of this application, the battery 100 may be used as not only the operational power source for the vehicle 1000 but also a driving power source for the vehicle 1000, replacing or partially replacing fossil fuel or natural gas to provide driving traction for the vehicle 1000.

To meet different requirements for power use, the battery 100 may include a plurality of battery cells 10. A battery cell 10 is a smallest element constituting a battery 100 module or battery 100 pack. The plurality of battery cells 10 may be connected in series, parallel, or series-parallel, where being connected in series-parallel means a combination of series and parallel connections of the plurality of battery cells 10. The plurality of battery cells 10 may be directly connected in series, parallel, or series-parallel, and then an entirety of the plurality of battery cells 10 is accommodated in the box. Certainly, the battery 100 may be formed by a plurality of battery cells 10 being connected in series, parallel, or series-parallel first to form a battery 100 module and then a plurality of battery 100 modules being connected in series, parallel, or series-parallel to form an entirety which is accommodated in the box. The battery 100 may further include other structures. For example, the battery 100 may further include a busbar configured to implement electrical connection between the plurality of battery cells 10. Each battery cell 10 may be a secondary battery or a primary battery, or may be a lithium-sulfur battery, a sodium-ion battery, or a magnesium-ion battery, without being limited thereto. The battery cell 10 may be of a cylindrical shape, a flat body, a cuboid shape, or other shapes.

Referring to FIG. 2, the battery 100 includes a battery box 20 and at least one battery cell 10 (not shown in the figure). The battery cell 10 is disposed in a mounting space of the battery box 20.

The battery box 20 may be a simple three-dimensional structure such as a rectangular, cylindrical, or spherical structure or may be a complex three-dimensional structure combining simple three-dimensional structures such as rectangular, cylindrical, or spherical structures. The battery box 20 may be made of an alloy material such as aluminum alloy or iron alloy, a polymer material such as polycarbonate or polyisocyanurate foam, or a composite material produced from materials such as glass fiber and epoxy resin.

The battery box 20 is configured to accommodate the battery cell 10. The battery box 20 may have various structures. In some embodiments, the battery box 20 may include a first box portion 21 and a second box portion 22. The first box portion 21 and the second box portion 22 fit together. The first box portion 21 and the second box portion 22 jointly define an accommodating space for accommodating the battery cell 10. The second box portion 22 may be a hollow structure with one end open, the first box portion 21 is a plate-shaped structure, and the first box portion 21 covers the opening side of the second box portion 22 so as to form the box 20 having the mounting space. Alternatively, the first box portion 21 and the second box portion 22 may both be hollow structures with one end open, and the opening side of the first box portion 21 fits with the opening side of the second box portion 22 so as to form the box 20 having the mounting space. Certainly, the first box portion 21 and the second box portion 22 may have various shapes, for example, cylindrical or cuboid.

To improve airtightness after connection of the first box portion 21 and the second box portion 22, a sealing element, such as sealing gum and sealing ring, may further be disposed between the first box portion 21 and the second box portion 22.

Assuming that the first box portion 21 fits on a top of the second box portion 22, the first box portion 21 may also be referred to as an upper box part, and the second box portion 22 may also be referred to as a lower box part.

In the battery 100, one or a plurality of battery cells 10 may be provided. If a plurality of battery cells 10 are provided, the plurality of battery cells 10 may be connected in series, parallel, or series-parallel, where being connected in series-parallel means a combination of series and parallel connections of the plurality of battery cells 10. The plurality of battery cells 10 may be directly connected in series, parallel, or series-parallel, and then an entirety of the plurality of battery cells 10 is accommodated in the battery box 20; or certainly, the battery 100 may be formed by the plurality of battery cells 10 being connected in series, parallel or series-parallel first to form a battery 100 module and then a plurality of battery 100 modules being connected in series, parallel or series-parallel to form an entirety which is accommodated in the battery box 20.

For example, the battery cell 10 may include a lithium-ion battery cell 10, a sodium-ion battery cell 10, a magnesium-ion battery cell 10, or the like. This is not limited in the embodiments of this application. The battery cell 10 may be of a cylindrical shape, a flat body, a cuboid shape, or other shapes. This is not limited in the embodiments of this application either. The battery cells 10 are usually categorized into three types depending on their packaging: cylindrical battery cells 10, square battery cells 10, and pouch battery cells 10. This is not limited in the embodiments of this application either.

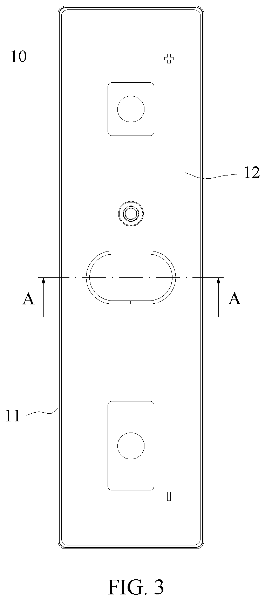

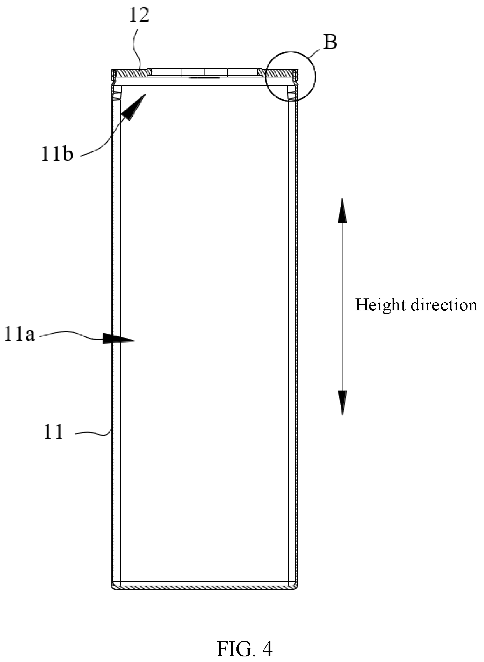

The embodiments of this application provide a battery cell 10. Referring to FIG. 3 to FIG. 6, the battery cell 10 includes a housing 11, a top cover 12, and an electrode assembly. The housing 11 has an accommodating space 11a and an opening 11b. The top cover 12 sealingly covers the opening 11b. The electrode assembly is disposed in the accommodating space 11a. The top cover 12 includes a cover body 121, a connecting side wall 122, and a groove 12a formed between the cover body 121 and the connecting side wall 122. An end of the housing 11 extends into the groove 12a and is connected to the top cover 12.

The housing 11 may be of a cylindrical shape, a flat shape, a cuboid shape, or other shapes.

It should be noted that a height direction mentioned in the embodiments of this application is a direction of entering the accommodating space 11a from the opening 11b, or an opposite direction of entering the accommodating space 11a from the opening 11b. When the housing 11 is of a cylindrical shape, a height direction of the housing 11 is an axial direction of the housing 11.

For example, the cover body 121 and the connecting side wall 122 are an integral structure. The integral cover body 121 and connecting side wall 122 can reduce the number of components, reduce assembly time, and improve assembly efficiency and structural strength.

Certainly, the cover body 121 and the connecting side wall 122 may alternatively be separate structures. For example, the connecting side wall 122 is welded to a side of the cover body 121 closer to the electrode assembly. The separate cover body 121 and connecting side wall 122 facilitate forming.

The top cover 12 is provided with a cover body 121 and a connecting side wall 122, and a groove 12a is formed between the cover body 121 and the connecting side wall 122. On one hand, when the top cover 12 and the housing 11 are assembled, the end of the housing 11 is first extended into the groove 12a of the top cover 12, and then the housing 11 is connected to the top cover 12. This facilitates positioning of the housing 11, thereby improving assembly efficiency. On the other hand, when gas is generated during cycling swelling and charging and discharging of the electrode assembly to exert a force on a junction between the housing 11 and the top cover 12, the housing 11 deforms outward, the top cover 12 limits the housing 11 to be between the cover body 121 and the connecting side wall 122 through the groove 12a, and the connecting side wall 122 provides limiting and supporting effects on the housing 11, thereby restricting further outward deformation of the housing 11 to some extent, enhancing the structural strength at the junction between the top cover 12 and the housing 11, and reducing the risk of fatigue cracking in a connection structure between the housing 11 and the top cover 12.

In the battery cell 10 provided in the embodiments of this application, the top cover 12 sealingly covers the opening 11b of the housing 11. The top cover 12 is arranged to include a cover body 121 and a connecting side wall 122, and a groove 12a is formed between the cover body 121 and the connecting side wall 122, so that during assembly, the end of the housing 11 can extend into the groove 12a and be connected to the top cover 12. In this way, when gas is generated during cycling swelling and charging and discharging of the electrode assembly to exert a force on the junction between the housing 11 and the top cover 12, the housing 11 deforms outward, while the connecting side wall 122 provides limiting and supporting effects on the housing 11, thereby restricting further outward deformation of the housing 11 to some extent, reducing the risk of fatigue cracking in the connection structure between the housing 11 and the top cover 12, alleviating the problem of failure of the connection structure between the housing 11 and the top cover 12, and prolonging the service life of the battery cell 10.

It should be noted that a specific connection manner between the top cover 12 and the housing 11 is not limited herein, for example, welding.

In some embodiments, referring to FIG. 3 to FIG. 6, a height of the top cover 12 at the groove 12a satisfies that the top cover 12 and the end of the housing 11 can be welded by penetrating welding. That is, the top cover 12 and the end of the housing 11 can be welded by laser from the outside of the top cover 12. For example, the end of the housing 11 is welded to a side wall of the groove 12a in a height direction.

It can be understood that excessively large height size of the top cover 12 at the groove 12a leads to reduced welding efficiency or welding effect of laser. Therefore, the height of the top cover 12 at the groove 12a needs to satisfy the penetrating welding between the top cover 12 and the end of the housing 11.

Certainly, for example, a side wall of the housing 11 may be connected to the connecting side wall 122, or a side wall of the housing 11 may be connected to the connecting side wall 122 while the end of the housing 11 is welded to a groove wall of the groove 12a.

It should be noted that a specific structure of the housing 11 is not limited herein.

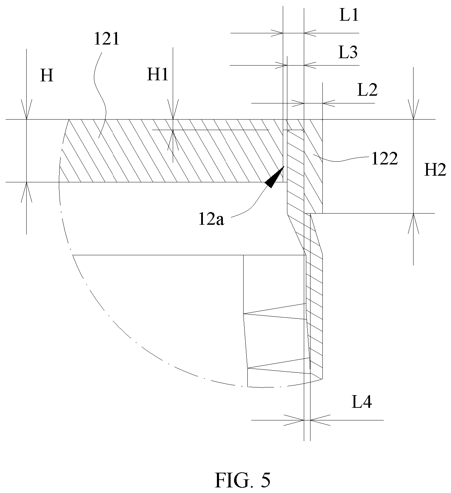

In some embodiments, referring to FIG. 5, the housing 11 includes a body section 11c and a connecting section 11d connected to the body section 11c. The connecting section 11d extends into the groove 12a and is connected to the top cover 12. A distance between the connecting section 11d and a central axis of the battery cell 10 is smaller than a distance between the body section 11c and the central axis of the battery cell 10.

The distance between the connecting section 11d and the central axis of the battery cell 10 is smaller than the distance between the body section 11c and the central axis of the battery cell 10. In other words, the connecting section 11d forms the opening 11b, and the housing 11 is in a contracted shape at the opening 11b.

In these embodiments, arranging the distance between the connecting section 11d and the central axis of the battery cell 10 to be smaller than the distance between the body section 11c and the central axis of the battery cell 10 allows the body section 11c to expand outward as much as possible while implementing that the connecting section 11d extends into the groove 12a and is connected to the top cover 12, thereby increasing a size of the accommodating space 11a and in turn increasing the energy density of the battery cell 10.

In some embodiments, referring to FIG. 5, the housing 11 includes a transition section 11e. The body section 11c and the connecting section 11d are connected through the transition section 11e. A plane in which the body section 11c is located is parallel to a plane in which the connecting section 11d is located. In a direction from the body section 11c to the connecting section 11d, a distance between the transition section 11e and the central axis of the battery cell 10 gradually decreases.

In these embodiments, the housing 11 is provided with a transition section 11e, and in the direction from the body section 11c to the connecting section 11d, the distance between the transition section 11e and the central axis of the battery cell 10 gradually decreases, thereby increasing the size of the accommodating space 11a as much as possible and further increasing the energy density of the battery cell 10.

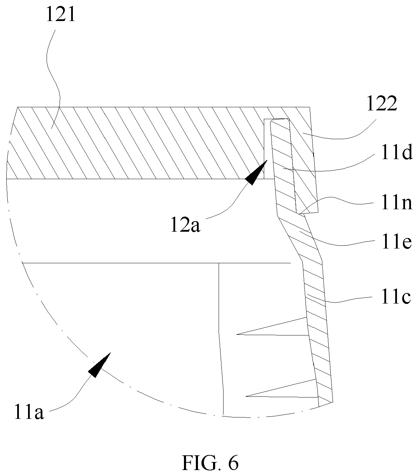

In some embodiments, referring to FIG. 5 and FIG. 6, a height of the top cover 12 at the groove 12a is H1, satisfying 0.2 mm ≤ H1 ≤ 1.5 mm. For example, the value is 0.2 mm, 0.3 mm, 0.5 mm, 0.6 mm, 0.8 mm, 1 mm, 1.1 mm, 1.2 mm, 1.3 mm, 1.4 mm, 1.5 mm, or the like.

The height of the top cover 12 at the groove 12a is a thickness of a groove wall of the top cover 12 at the groove 12a.

Excessively large height size of the top cover 12 at the groove 12a leads to reduced welding efficiency or welding effect of laser. Excessively small height size of the top cover 12 at the groove 12a leads to reduced structural strength of the top cover 12 at the groove 12a.

In these embodiments, setting the height of the top cover 12 at the groove 12a to 0.2 mm to 1.5 mm allows the height of the top cover 12 at the groove 12a to satisfy penetrating welding between the top cover 12 and the end of the housing 11, and allows the top cover 12 to have sufficient structural strength at the groove 12a.

In some embodiments, referring to FIG. 5 and FIG. 6, a height of the top cover 12 at the groove 12a is H1, satisfying 0.3 mm ≤ H1 ≤ 1 mm. For example, the value is 0.3 mm, 0.4 mm, 0.7 mm, 0.9 mm, 1 mm, or the like.

In these embodiments, setting the height of the top cover 12 at the groove 12a to 0.3 mm to 1 mm facilitates penetrating welding between the top cover 12 and the end of the housing 11, and further allows the top cover 12 to have sufficient structural strength at the groove 12a.

In some embodiments, referring to FIG. 5 and FIG. 6, on a cross section perpendicular to an extension direction of the groove 12a, a width of the groove 12a is L1, satisfying 0.4 mm ≤ L1 ≤ 3.5 mm. For example, the value is 0.4 mm, 0.5 mm, 0.6 mm, 0.8 mm, 1 mm, 1.3 mm, 1.5 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.4 mm, 3.5 mm, or the like.

The width of the groove 12a herein refers to a size of the groove 12a in a thickness direction of the housing 11.

It can be understood that larger width of the groove 12a is more conducive to assembly between the housing 11 and the top cover 12 and the strength of the connection structure between the top end of the housing 11 and the top cover 12.

In these embodiments, setting the width of the groove 12a to 0.4 mm to 3.5 mm helps the end of the housing 11 to extend into the groove 12a and helps to increase a welding area between the end of the housing 11 and a groove wall of the groove 12a, thereby enhancing the strength of the connection structure between the housing 11 and the top cover 12, reducing the risk of cracking of the connection structure between the housing 11 and the top cover 12, and prolonging the service life of the battery cell 10.

In some embodiments, referring to FIG. 5 and FIG. 6, on a cross section perpendicular to an extension direction of the groove 12a, a width of the groove 12a is L1, satisfying 0.6 mm ≤ L1 ≤ 1 mm. For example, the value is 0.6 mm, 0.7 mm, 0.8 mm, 0.9 mm, 1 mm, or the like.

In these embodiments, setting the width of the groove 12a to 0.6 mm to 1 mm facilitates manufacturing and forming of the housing 11 and the top cover 12 while allowing for sufficient strength of the connection structure between the housing 11 and the top cover 12.

In some embodiments, referring to FIG. 5 and FIG. 6, a height of the connecting side wall 122 is H2, and a height of the cover body is H, satisfying H - 0.5 mm ≤ H2 ≤ 13 mm. That is, the height of the connecting side wall 122 is greater than or equal to the height of the cover body minus 0.5 mm and less than or equal to 13 mm.

The connecting side wall 122 within this height range allows for sufficient contact area between the connecting side wall 122 and the housing 11. When gas is generated during cycling swelling and charging and discharging of the electrode assembly to exert a force on the junction between the housing 11 and the top cover 12, the connecting side wall 122 provides sufficient limiting and supporting effects on the housing 11, thereby restricting further outward deformation of the housing 11 to some extent, reducing the risk of fatigue cracking in the connection structure between the housing 11 and the top cover 12, alleviating the problem of failure of the connection structure between the housing 11 and the top cover 12, and prolonging the service life of the battery cell 10.

In some embodiments, referring to FIG. 5 and FIG. 6, a height of the connecting side wall 122 is H2, and a height of the cover body is H, satisfying H ≤ H2 ≤ 11 mm. That is, the height of the connecting side wall 122 is greater than or equal to the height of the cover body and less than or equal to 11 mm.

In these embodiments, the connecting side wall 122 within this height range can further allows for sufficient contact area between the connecting side wall 122 and the housing 11. When gas is generated during cycling swelling and charging and discharging of the electrode assembly to exert a force on the junction between the housing 11 and the top cover 12, the connecting side wall 122 provides sufficient limiting and supporting effects on the housing 11, thereby restricting further outward deformation of the housing 11 to some extent, further reducing the risk of fatigue cracking in the connection structure between the housing 11 and the top cover 12, alleviating the problem of failure of the connection structure between the housing 11 and the top cover 12, and prolonging the service life of the battery cell 10.

In some embodiments, referring to FIG. 5 and FIG. 6, a thickness of the connecting side wall 122 is L2, satisfying 0.2 mm ≤ L2 ≤ 1.5 mm. For example, the value is 0.2 mm, 0.4 mm, 0.5 mm, 0.7 mm, 0.9 mm, 1 mm, 1.1 mm, 1.2 mm, 1.3 mm, 1.4 mm, 1.5 mm, or the like.

In these embodiments, setting the thickness of the connecting side wall 122 to 0.2 mm to 1.5 mm allows for sufficient strength of the connecting side wall 122, thereby enhancing the structural strength at the junction between the top cover 12 and the housing 11 while also reducing a volume of the top cover 12 as much as possible, thereby increasing the energy density of the battery cell 10.

In some embodiments, referring to FIG. 5 and FIG. 6, a thickness of the connecting side wall 122 is L2, satisfying 0.3 mm ≤ L2 ≤ 1 mm. For example, the value is 0.3 mm, 0.4 mm, 0.5 mm, 0.6 mm, 0.8 mm, 0.9 mm, 1 mm, or the like.

In these embodiments, setting the thickness of the connecting side wall 122 to 0.3 mm to 1 mm further allows for sufficient strength of the connecting side wall 122, thereby enhancing the structural strength at the junction between the top cover 12 and the housing 11 while also further reducing the volume of the top cover 12, thereby increasing the energy density of the battery cell 10.

In some embodiments, referring to FIG. 5 and FIG. 6, a thickness of the connecting section 11d is L3, satisfying 0.3 mm ≤ L3 ≤ 3 mm. For example, the value is 0.3 mm, 0.4 mm, 0.5 mm, 0.6 mm, 0.7 mm, 0.9 mm, 1 mm, 1.2 mm, 1.5 mm, 1.6 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, or the like.

The thickness of the connecting section 11d herein is a thickness at the junction between the housing 11 and the top cover 12. In other words, it is a thickness of a region, of the housing 11, that extends into the groove 12a.

In these embodiments, setting the thickness of the connecting section 11d to 0.3 mm to 3 mm allows for sufficient strength of the connecting section 11d, thereby enhancing the structural strength at the junction between the top cover 12 and the housing 11 while also reducing volumes of the top cover 12 and the housing 11 as much as possible, thereby increasing the energy density of the battery cell 10.

In some embodiments, referring to FIG. 5 and FIG. 6, on a cross section perpendicular to an extension direction of the groove 12a, a width of the groove 12a is L1, and a thickness of the connecting section 11d is L3, satisfying 0 ≤ L1 - L3 ≤ 0.3 mm. For example, the value is 0, 0.1 mm, 0.15 mm, 0.2 mm, 0.25 mm, 0.3 mm, or the like.

The difference L1 - L3 is set to range from 0 mm to 0.3 mm. On one hand, this helps the housing 11 to extend into the groove 12a. On the other hand, this helps the connecting side wall 122 to provide limiting and supporting effects on the housing 11 when the housing 11 deforms outward, that is, helping to reduce the situation or degree of deformation of the housing 11.

In some embodiments, referring to FIG. 5 and FIG. 6, a stepped surface 11n facing the top cover 12 is formed on an outer side wall of the housing 11, and an end of the connecting side wall 122 abuts against the stepped surface 11n.

On one hand, the stepped surface 11n can provide a positioning effect on the top cover 12, and together with an end surface of the housing 11, provide a double positioning effect on the top cover 12, which helps to alleviate deformation of the top cover 12. On the other hand, this also helps to enhance the structural strength of the housing 11 at a position where the stepped surface 11n is formed.

In some embodiments, referring to FIG. 5 and FIG. 6, a size of the stepped surface 11n in a thickness direction of the housing 11 is L4, satisfying 0.1 mm ≤ L4 ≤ 0.5 mm. For example, the value is 0.1 mm, 0.2 mm, 0.3 mm, 0.4 mm, 0.5 mm, or the like.

The size of the stepped surface 11n in the thickness direction of the housing 11 herein is a distance by which the stepped surface 11n extends outward along the outer side wall of the housing 11.

In these embodiments, setting the size of the stepped surface 11n in the thickness direction of the housing 11 to 0.1 mm to 0.5 mm can reduce the volume of the housing 11 and a material used for forming as much as possible while implementing positioning of the top cover 12, which helps to reduce costs and increase the energy density of the battery cell 10.

It should be noted that the extension direction of the groove 12a is not limited herein.

In some embodiments, referring to FIG. 5 and FIG. 6, the groove 12a extends along an edge of the top cover 12.

The groove 12a extends along the edge of the top cover 12. That is, when projected on a plane parallel to the top cover 12, a contour shape of the groove 12a along a center line in the extension direction is completely the same as or substantially the same as a contour shape of the top cover 12.

It can be understood that the groove 12a extending along the edge of the top cover 12 can make distances between any two positions of the groove 12a in its extension direction and the edge of the top cover 12 the same, that is, distances between any two positions of the groove 12a in its extension direction and an outer side wall of the connecting side wall 122 can be the same. This allows for more even force distribution near the groove 12a.

It should be noted that the top cover 12 may have the groove 12a formed in a partial region between the cover body 121 and the connecting side wall 122, or may have the groove 12a formed in an entire region between the cover body 121 and the connecting side wall 122, that is, the top cover 12 is provided with the groove 12a in a circle extending along the edge of the top cover 12. The edge of the top cover 12 herein refers to the outer side wall of the connecting side wall 122.

In some embodiments, the battery cell 10 is of a cylindrical shape, and at least a partial region of the top cover 12 is provided with the groove 12a.

For example, when the battery cell 10 is of a cylindrical shape, the top cover 12 may be provided with the groove 12a in a circle extending along the edge of the top cover 12, or may be partially surrounded by the groove 12a.

In some embodiments, the battery cell 10 is of a cuboid shape, and at least one longer side of the top cover 12 is provided with the groove 12a.

One longer side of the top cover 12 may be provided with the groove 12a, or both longer sides of the top cover 12 may be provided with the groove 12a.

When the battery cell 10 is of a rectangular shape, the top cover 12 and the housing 11 are more prone to outward deformation and cracking at a larger surface, that is, the connection structure between the top cover 12 and the housing 11 fails at the longer side of the top cover 12. Therefore, providing the groove 12a on the longer side of the top cover 12 can effectively alleviate the problem of failure of the connection structure between the top cover 12 and the housing 11.

The groove 12a may be formed in a partial or entire region of the longer side, or may be formed in a partial or entire region of a shorter side. In some embodiments, the top cover 12 is provided with the groove 12a in a circle corresponding to the contour of the top cover 12.

In some embodiments, the top cover 12 and/or the housing 11 is made of aluminum.

It can be understood that when the top cover 12 and/or the housing 11 is made of aluminum, a groove 12a is formed between the cover body 121 and the connecting side wall 122, so that during assembly, the end of the housing 11 can extend into the groove 12a and be connected to the top cover 12. In this way, when gas is generated during cycling swelling and charging and discharging of the electrode assembly to exert a force on the junction between the housing 11 and the top cover 12, the housing 11 deforms outward, while the connecting side wall 122 provides limiting and supporting effects on the housing 11, thereby restricting further outward deformation of the housing 11 to some extent, reducing the risk of fatigue cracking in the connection structure between the housing 11 and the top cover 12, alleviating the problem of failure of the connection structure between the housing 11 and the top cover 12, and prolonging the service life of the battery cell 10.

In some embodiments, referring to FIG. 5 and FIG. 6, a height of the cover body 121 is H, satisfying 1 mm ≤ H ≤ 5 mm. For example, the value is 1 mm, 1.2 mm, 1.4 mm, 1.5 mm, 1.8 mm, 2 mm, 3 mm, 3.4 mm, 3.5 mm, 3.7 mm, 4 mm, 4.4 mm, 4.5 mm, 4.7 mm, 5 mm, or the like.

In these embodiments, setting the height of the cover body 121 to 1 mm to 5 mm allows the top cover 1212 to have sufficient strength to protect the electrode assembly in the accommodating space 11a while also reducing the weight and volume of the battery cell 10, reducing the material used for the top cover 12, reducing costs, and improving the overall performance of the battery 100.

In some other embodiments, referring to FIG. 5 and FIG. 6, a height of the cover body 121 is H, satisfying 1.5 mm ≤ H ≤ 3 mm. For example, the value is 1.5 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, or the like.

In these embodiments, setting the height of the cover body 121 to 1.5 mm to 3 mm allows the top cover 12 to have sufficient strength to protect the electrode assembly in the accommodating space 11a while further reducing the weight and volume of the battery cell 10, reducing the material used for the top cover 12, reducing costs, and further improving the overall performance of the battery 100.

It should be noted that the values of the height H of the cover body, the height H1 of the top cover 12 at the groove 12a, the height H2 of the connecting side wall 122, the width L1 of the groove 12a, the thickness L2 of the connecting side wall 122, the thickness L3 of the connecting section 11d, the size L4 of the stepped surface 11n in the thickness direction of the housing 11, and the like can be tested and calculated by high-precision thickness gauges, vernier calipers, and other instruments at room temperature when the top cover 12 is not assembled.

The following further describes the battery cell 10 of this application with reference to specific test examples.

Test samples of the embodiments of this application are as follows: A top cover 12 includes a cover body 121 and a connecting member. The cover body 121 has a channel penetrating the cover body 121. The connecting member is disposed on a side of the cover body 121 closer to an electrode assembly and closes the channel.

Charge-discharge cycle experiments were performed on the test samples of the embodiments of this application and the control group separately and the numbers of cycles were recorded. The numbers of cycles of the five control groups of the embodiments of this application were 3010, 3312, 3126, 3385, and 3215 respectively. The average number of cycles of the five test samples of the embodiments of this application was 3209. The numbers of cycles of the five test samples of the control groups were 3916, 3852, 3733, 3949, and 3871 respectively. The average number of cycles of the five test samples of the embodiments of this application was 3864. The average value of the test samples of the embodiments of this application was increased by 20.4% compared with the average value of the control group. When gas is generated during charging and discharging of the electrode assembly, a force is exerted on the junction between the housing 11 and the top cover 12. The number of cycles of the battery cell 10 provided in the embodiments of this application is much greater than that of the control group. That is, the battery cell 10 provided in the embodiments of this application reduces the risk of cracking of the connection structure between the housing 11 and the top cover 12, alleviates the problem of failure of the connection structure between the housing 11 and the top cover 12, and prolongs the service life of the battery cell 10.

In the description of this application, descriptions referring to the terms "in an embodiment", "in some embodiments", "in some other embodiments", "in still some other embodiments", "in an example", or the like mean the specific features, structures, materials or characteristics described with reference to the embodiment or example are included in at least one embodiment or example of this application. In this application, the illustrative expressions of these terms do not necessarily refer to the same embodiment or example. Moreover, the specific features, structures, materials, or characteristics described may be combined in any suitable manners in any one or more embodiments or examples. In addition, without mutual conflict, persons skilled in the art may incorporate different embodiments or examples and features of the different embodiments or examples described in this application.

The foregoing descriptions are merely preferred embodiments of this application and are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, comprising:
a housing having an accommodating space and an opening;
a top cover sealingly covering the opening; and
an electrode assembly disposed in the accommodating space;
wherein the top cover comprises a cover body, a connecting side wall, and a groove formed between the cover body and the connecting side wall, and an end of the housing extends into the groove and is connected to the top cover.

2. The battery cell according to claim 1, wherein the housing comprises a body section and a connecting section connected to the body section, the connecting section extends into the groove and is connected to the top cover, and a distance between the connecting section and a central axis of the battery cell is smaller than a distance between the body section and the central axis of the battery cell.

3. The battery cell according to claim 1 or 2, wherein the housing comprises a transition section, the body section and the connecting section are connected through the transition section, a plane in which the body section is located is parallel to a plane in which the connecting section is located, and in a direction from the body section to the connecting section, a distance between the transition section and a central axis of the battery cell gradually decreases.

4. The battery cell according to any one of claims 1 to 3, wherein a height of the top cover at the groove is H1, satisfying 0.2 mm ≤ H1 ≤ 1.5 mm; and/or
on a cross section perpendicular to an extension direction of the groove, a width of the groove is L1, satisfying 0.4 mm ≤ L1 ≤ 3.5 mm.

5. The battery cell according to any one of claims 1 to 3, wherein a height of the top cover at the groove is H1, satisfying 0.3 mm ≤ H1 ≤ 1 mm; and/or
on a cross section perpendicular to an extension direction of the groove, a width of the groove is L1, satisfying 0.6 mm ≤ L1 ≤ 1 mm.

6. The battery cell according to any one of claims 1 to 5, wherein a height of the connecting side wall is H2, and a height of the cover body is H, satisfying H - 0.5 mm ≤ H2 ≤ 13 mm; and/or
a thickness of the connecting side wall is L2, satisfying 0.2 mm ≤ L2 ≤ 1.5 mm.

7. The battery cell according to claim 3, wherein a thickness of the connecting section is L3, satisfying 0.3 mm ≤ L3 ≤ 3 mm; or
on a cross section perpendicular to an extension direction of the groove, a width of the groove is L1, and a thickness of the connecting section is L3, satisfying 0 ≤ L1 - L3 ≤ 0.3 mm.

8. The battery cell according to any one of claims 1 to 7, wherein a stepped surface facing the top cover is formed on an outer side wall of the housing, and an end of the connecting side wall abuts against the stepped surface.

9. The battery cell according to claim 8, wherein a size of the stepped surface in a thickness direction of the housing is L4, satisfying 0.1 mm ≤ L4 ≤ 0.5 mm.

10. The battery cell according to any one of claims 1 to 9, wherein the groove extends along an edge of the top cover.

11. The battery cell according to any one of claims 4 to 10, wherein the top cover and/or the housing is made of aluminum.

12. The battery cell according to any one of claims 1 to 11, wherein the battery cell is of a cuboid shape, and at least one longer side of the top cover is provided with the groove; or
the battery cell is of a cylindrical shape, and at least a partial region of the top cover is provided with the groove.

13. The battery cell according to any one of claims 1 to 12, wherein a height of the cover body is H, satisfying 1 mm ≤ H ≤ 5 mm.

14. A battery, comprising at least one battery cell according to any one of claims 1 to 13.

15. An electric apparatus, comprising the battery according to claim 14, wherein the battery is configured to supply electrical energy to the electric apparatus.
